# EUROPÄISCHE PATENTSCHRIFT

(11) **EP 2 184 567 B1**
(45) Veröffentlichungstag und Bekanntmachung des Hinweises auf die Patenterteilung: **18.07.2018**
(21) Anmeldenummer: 09174691.7
(22) Anmeldetag: 30.10.2009
(51) Int. Cl.: F25B 43/00

(54) **Einsatz für einen Sammler eines Kondensators**
Insert for a collector of a condenser
Insert pour un collecteur d'un condensateur

(30) Priorität: 10.11.2008 DE 102008056590
(43) Veröffentlichungstag der Anmeldung: 12.05.2010
(73) Patentinhaber: MAHLE Behr GmbH & Co. KG, 70469 Stuttgart (DE)
(72) Erfinder: Molt, Kurt, 74321, Bietigheim-Bissingen (DE); Kaspar, Martin, 70734, Fellbach (DE); Betz, Michael, 70734, Fellbach (DE)
(74) Vertreter: Grauel, Andreas

(56) Entgegenhaltungen:
- EP-A1- 1 522 804
- WO-A1-2006/128720
- DE-A1-102005 005 187
- US-A1- 2002 083 732
- US-B1- 6 279 341
- US-B1- 6 481 241

## Beschreibung

Die vorliegende Erfindung bezieht sich auf einen Einsatz für einen Sammler eines Kondensators und auf ein Trocknersäckchen, das zur Verwendung mit dem Einsatz geeignet ist.

Kondensatoren mit Sammler für Klimaanlagen von Kraftfahrzeugen werden von einem Kältemittel von oben nach unten durchströmt. Dabei ist die Unterkühlstrecke als letzter Strömungsweg im Kondensator unten angeordnet. Ein in Luftrichtung gesehen vor dem Kondensator angeordneter Ladeluftkühler, der den Kondensator im unteren Bereich überdeckt, erwärmt die dem Kondensator zugeführte Kühlluft. Somit kann sich das flüssige Kältemittel in der Unterkühlstrecke weniger stark abkühlen.

Durch Verlagerung der Unterkühlstrecke vom unteren in den oberen Kondensatorbereich kann die Erwärmung der Unterkühlstrecke durch den vorgelagerten Wärmetauscher vermieden werden. Hierzu ist es notwendig, den Austritt des Sammlers in den oberen Bereich zu legen, um das flüssige Kältemittel in die nun obenliegende Unterkühlstrecke zu führen.

Ein Einsatz im Sammler, bestehend aus einem oder mehreren Röhren kann die Strömung im Sammler so steuern, dass das flüssige Kältemittel vom unteren Bereich des Sammlers abgesaugt und in den oberen Bereich des Sammlers und damit in die Unterkühlstrecke geleitet wird.

Zusammen mit dem Einsatz kann ein Trocknersäckchen, gefüllt mit Trockenmittel im Sammler verbaut sein, das eventuell im Kältemittel befindliches Wasser bindet. Durch den Platzbedarf dieses Trocknersäckchens und des Einsatzes ist der Bauraum für beide Elemente im Sammler sehr beengt. Dadurch erschwert sich der Einbau der beiden Elemente durch die dabei auftretenden Reibkräfte.

Der gemeinsame Einbau von Einsatz und Trocknersäckchen ist somit aufwendig, da das Trocknersäckchen durch die Reibkräfte an der Innenwand des Sammlers während des Einschubvorgangs verrutschen kann und den Einbau hinsichtlich Prozesssicherheit erschwert.

Die DE 10 2005 005 187 A1 befasst sich mit einem solchen Kondensator. Im Inneren des Sammlers des Kondensators ist ein Filter-Trockner angeordnet. Zur Befestigung weist der Filter-Trockner zwei Stirn-Flansche auf.

Es ist die Aufgabe der vorliegenden Erfindung einen verbesserten Einsatz mit einem Trocknersäckchen für einen Sammler eines Kondensators zu schaffen. Diese Aufgabe wird durch einen Einsatz gemäß Anspruch 1 gelöst.

Der vorliegenden Erfindung liegt die Erkenntnis zugrunde, dass sich der gemeinsame Einbau von Einsatz und Trocknersäckchen in einen Sammler erheblich vereinfachen lässt, wenn der Einsatz einen Anschlag aufweist, der während des Einschubvorgangs eine Kraft auf das Trocknersäckchen ausübt, um das Trocknersäckchen zusammen mit dem Einsatz in den Sammler zu schieben.

Vorteilhafterweise ermöglicht der erfindungsgemäße Ansatz eine Fixierung des Trocknersäckchens am Einsatz, so dass der Einbau der Baugruppe Einsatz und Trocknersäckchen prozesssicher möglich ist. Dazu sind weder am Trocknersäckchen noch am Einsatz aufwändige Befestigungseinrichtungen erforderlich.

Die vorliegende Erfindung schafft einen Einsatz für einen Sammler eines Kondensators, wobei der Einsatz ein erstes und ein zweites Ende aufweist und mit dem zweiten Ende voran in den Sammler eingeführt werden kann, mit folgenden Merkmalen: einem Rohrsystem zum Leiten eines Kältemittels, wobei das Rohrsystem zwischen dem ersten und dem zweiten Ende des Einsatzes angeordnet ist; einem Aufnahmeraum zum Aufnehmen eines Trocknersäckchens, wobei der Aufnahmeraum zwischen dem ersten und dem zweiten Ende des Einsatzes angeordnet ist; und mindestens einem Anschlag, der ausgebildet ist, um beim Einführen des Einsatzes in den Sammler einen Anschlag für das Trocknersäckchen zu bilden, wenn das Trocknersäckchen in dem Aufnahmeraum angeordnet ist. Das Rohrsystem kann eines oder mehrere Rohre aufweisen, die einen vorbestimmten Strömungsverlauf des Kältemittels durch den Sammler ermöglichen. Der Aufnahmeraum kann angrenzend an das Rohrsystem angeordnet sein. Bei dem Trocknersäckchen kann es sich allgemein um einen Behälter handeln, der mit einem Trocknermittel gefüllt ist. Insbesondere kann es sich um einen Vliesbeutel handeln. Ist der Sammler vertikal angeordnet, so kann es sich bei dem ersten Ende um ein oberes Ende des Einsatzes und bei dem zweiten Ende um ein unteres Ende des Einsatzes handeln. In diesem Fall kann der Einsatz beim Einbau von oben in den Sammler eingeführt werden. Durch den Anschlag kann der Einbauvorgang, bei dem das Trocknersäckchen und der Einsatz in den Sammler eingebaut werden, erheblich vereinfacht werden. Somit reduzieren sich sowohl die Einbauzeit als auch die Einbaukosten. Vorteilhafterweise ist der erfindungsgemäße Anschlag bei der Fertigung des Einsatzes kostengünstig zu realisieren. Insgesamt wird ein prozesssicherer Einbauvorgang der Baugruppe Trocknersäckchen und Einsatz, ohne Verklemmen oder Verrutschen des Trocknersäckchens ermöglicht.

Gemäß einer Ausgestaltung kann der mindestens eine Anschlag ausgebildet sein, um eine lose Verbindung zu dem Trocknersäcken bereitzustellen, wenn das Trocknersäckchen in dem Aufnahmeraum angeordnet ist. Die lose Verbindung kann zustande kommen, wenn der Anschlag während des Einbauvorganges gegen das Trocknersäckchen drückt und das Trocknersäckchen auf diese Weise in den Sammler schiebt. Vorteilhafterweise ist dazu keine feste Verbindung zwischen dem Anschlag und dem Trocknersäckchen erforderlich.

Der erfindungsgemäße Einsatz weist einen ersten Anschlag auf, der ausgebildet ist, um beim Einführen des Einsatzes einen Anschlag für das Trocknersäckchen in Richtung des ersten Endes zu bilden. Somit kann das Trocknersäckchen mit Hilfe des ersten Anschlags in den Sammler hineingeschoben werden. Zusätzlich weist der erfindungsgemäße Einsatz einen zweiten Anschlag auf, der ausgebildet ist, um beim Herausführen des Einsatzes aus dem Sammler einen Anschlag für das Trocknersäckchen in Richtung des zweiten Endes zu bilden. Somit kann das Trocknersäckchen einfach aus dem Sammler entfernt werden.

Erfindungsgemäß kann der Abstand zwischen dem ersten Anschlag und dem zweiten Anschlag größer als eine Länge des Trocknersäckchens sein. Dies ist möglich, da das Trocknersäckchen nicht fest mit den beiden Anschlägen verbunden sein muss.

Gemäß einer Ausgestaltung kann der zweite Anschlag ausgebildet sein, um eine feste Verbindung zu dem Trocknersäckchen bereitzustellen. Hierbei ist der erste Anschlag nicht notwendig, da durch die Verbindung des Säckchens mit dem zweiten Anschlag ein sicheres Einschieben gewährleistet ist.

Dabei kann der zweite Anschlag einen Haken zum Befestigen des Trocknersäckchens aufweisen. Durch den Haken kann ein Abrutschen des Trocknersäckchens von dem zweiten Anschlag vermieden werden.

Erfindungsgemäß ist der mindestens eine Anschlag als Platte ausgebildet, die quer zwischen dem ersten und dem zweiten Ende angeordnet ist. Eine solche Platte ist einfach zu realisieren und ermöglicht ein sicheres Verschieben des Trocknersäckchens. Dabei kann die Platte ausgehend von dem Rohrsystem in den Aufnahmeraum reichen. Somit kann das Rohrsystem zur Befestigung der Platte genutzt werden. Erfindungsgemäß weist der Einsatz ein Trocknersäckchen auf.

Das Trocknersäckchen kann einen Trockenmittelraum und einen an den Trockenmittelraum angrenzenden Fortsatz aufweisen, wobei der Fortsatz eine Öffnung aufweist, in die der mindestens eine Anschlag des Einsatzes eingeführt werden kann. In dem Trockenmittelraum kann ein Trockenmittel angeordnet sein. Die Öffnung kann als Schlitz oder Öse ausgeführt sein, so dass das Trocknersäckchen einfach in den Anschlag eingehakt werden kann.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung eines Sammlers mit eingebautem Einsatz und Trocknersäckchen;
- Fig. 2: eine Darstellung eines Einsatzes mit Trocknersäckchen;
- Fig. 3: eine weitere Darstellung eines Einsatzes mit Trocknersäckchen;
- Fig. 4: eine Darstellung eines Trocknersäckchen;
- Fig. 5: eine weitere Darstellung eines Einsatzes mit Trocknersäckchen; und
- Fig. 6: eine weitere Darstellung eines Einsatzes mit Trocknersäckchen.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

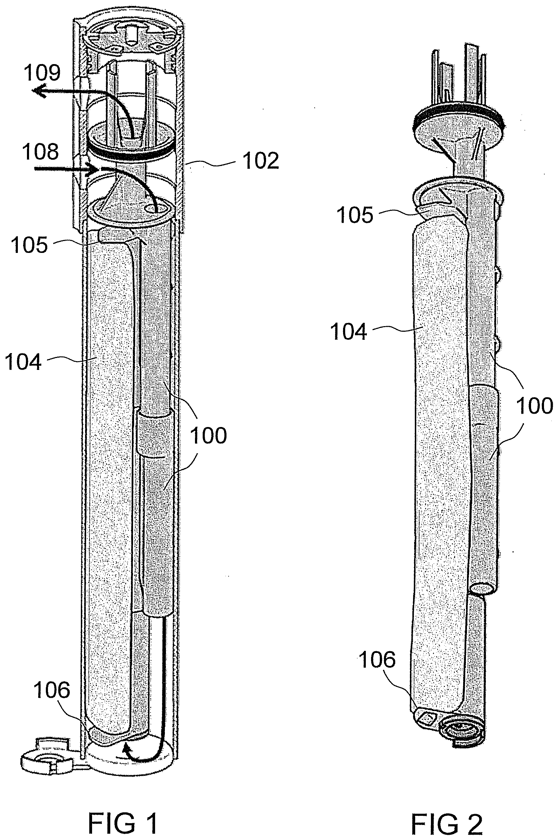

Fig. 1 zeigt einen Einsatz 100, der in einem Sammler 102 eines Kondensators angeordnet ist. Ein Trocknersäckchen 104 ist zwischen einem oberen Anschlag 105 und einem unteren Anschlag 106 des Einsatzes 100 angeordnet. Der obere Anschlag 105 und der untere Anschlag 106 begrenzen einen Aufnahmeraum des Einsatzes 100, in dem das Trocknersäckchen 104 angeordnet werden kann. Der Einsatz 100 weist ein Röhrensystem auf, das ausgebildet ist, um ein Kältemittel durch den Sammler 102 zu leiten. Dazu weist der Einsatz 100 im oberen Bereich einen Kältemitteleintritt 108 und einen Kältemittelaustritt 109 auf. Somit kann die Unterkühlstrecke des Kondensators im oberen Bereich angeordnet sein.

Der Sammler 102 kann als zylinderförmiger Behälter ausgebildet sein. Der Einsatz 100 kann von oben in den Sammler 102 eingeführt werden. Anschließend kann der Sammler 102 im oberen Bereich verschlossen werden. Der Einsatz 100 weist ein erstes vertikal angeordnetes Rohr auf, das ausgebildet ist, um das Kältemittel von dem Einlass 108 in den unteren Bereich des Sammlers 102 zu führen. Der Einsatz 100 weist ferner ein zweites vertikal angeordnetes Rohr auf, das ausgebildet ist, um das Kältemittel aus dem unteren Bereich des Sammlers 102 abzusaugen und in den oberen Bereich des Sammlers 102 und damit in die Unterkühlstrecke zu leiten. Das zweite Rohr ist neben dem ersten Rohr angeordnet. Das erste Rohr endet gemäß diesem Ausführungsbeispiel oberhalb eines unteren Bodens des Sammlers 102.

Das Trocknersäckchen 104 kann neben den Rohren des Einsatzes 100 angeordnet werden. Die Anschläge 105, 106 können als Platten ausgeführt sein, die mit dem Rohrsystem des Einsatzes 100 verbunden sind. Als oberer Anschlag 105 kann eine Platte im oberen Bereich des Einsatzes 100 senkrecht oder annähernd senkrecht von dem ersten Rohr abstehen. Als unterer Anschlag 106 kann eine weitere Platte im unteren Bereich des Einsatzes 100 senkrecht oder annähernd senkrecht von dem zweiten Rohr abstehen. Gemäß dem in Fig. 1 gezeigten Ausführungsbeispiel ist der Einsatz 100 mit vertikalen Strömungsrohren am oberen und auch am unteren Bereich mit einer horizontalen Platte 105, 106 versehen. Die horizontalen Platten 105, 106 können in einem Abstand angebracht sein, der geringfügig größer als die Länge des Trocknersäckchen 104 ist. Die Platten 105, 106 können jeweils einen Querschnitt des Sammlers 102, der nicht bereits von dem Rohrsystem ausgefüllt ist, zumindest teilweise ausfüllen. Insbesondere können die Platten 105, 106 jeweils eine durchgängige Auflagefläche für das Trocknersäckchen 104 ausbilden.

Beim Einschieben der Baugruppe Trocknersäckchen 104 und Einsatz 100 dient die obere Platte 105 als Anschlag, der eine Kraft auf das Trocknersäckchen 104 ausübt, um das Trocknersäckchen 104 zusammen mit dem Einsatz 100 in den Sammler 102 zu schieben. Durch eine geeignete Führung der Baugruppe in einer Montagevorrichtung kann dafür gesorgt werden, dass das Trocknersäckchen 104 nicht zur Seite hin ausknicken kann.

Beim Ausbau der Baugruppe Trocknersäckchen 104 und Einsatz 100 kann die untere Platte 106 das Trocknersäckchen 104 mit aus dem Sammler 102 herausschieben.

Fig. 2 zeigt den in Fig. 1 gezeigten Einsatz 100 und das Trocknersäckchen 104 in isometrischer Ansicht.

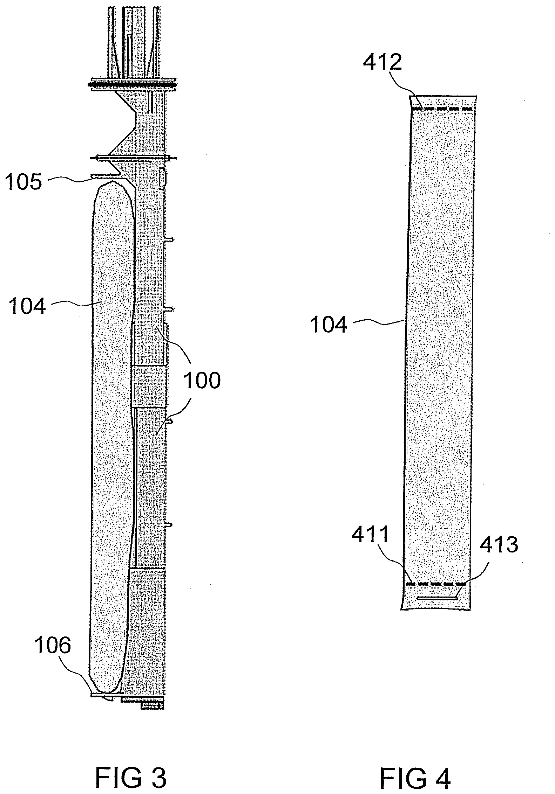

Fig. 3 zeigt den in Fig. 1 gezeigten Einsatz 100 und das Trocknersäckchen 104 in seitlicher Ansicht.

Der in den Figuren 1 bis 3 gezeigte Einsatz 100 mit oberer Platte 105 und unterer Platte 106 ermöglicht es, dass das Säckchen 104 beim Herausziehen des Einsatzes 100 aus dem Sammler mit herausgezogen wird. Alternativ kann der Einsatz 100 nur mit der oberen Platte 105 ausgeführt sein. Die obere Platte 105 dient in diesem Fall zum sicheren Einschieben des Trocknersäckchens 104 mit dem Einsatz 100. Beim Herausziehen des Einsatzes 100 ist das Säckchen 104 gegebenenfalls separat mit Hilfe einer Zange zu entfernen. Dies kann erforderlich sein, da das Säckchen 104 gemäß diesem Ausführungsbeispiel nicht fest mit der oberen Platte 105 verbunden ist.

Fig. 4 zeigt das Trocknersäckchen 104 gemäß einem Ausführungsbeispiel der vorliegenden Erfindung. Das Trocknersäckchen 104 kann aus einem Vliesbeutel bestehen, der an beiden Enden eine Schließnaht 411, 412 aufweist. Das Säckchen 104 ist schlauchförmig ausgeführt, so dass die Schließnahten 411, 412 eine flache Form aufweisen. Durch die Schließnahten 411, 412 wird ein Raum abgetrennt, in dem ein Trockenmittel angeordnet werden kann. Das Trockenmittel kann als granulares Molekularsieb vorhanden sein, das in dem Vliesbeutel eingehüllt ist und somit das Trocknersäckchen 104 bildet.

Erfindungsgemäß weist das Trocknersäckchen 104 einen an die Schließnaht 411 angrenzenden Fortsatz auf, in dem sich eine Öffnung 413 befindet. Die Öffnung 413 kann durch Lochung oder Ausschneiden eines geeigneten Schlitzes oder einer geeigneten Öse am Endfalz des Säckchens 104 gefertigt werden und an der vom Trockenmittel abgewandten Seite der Schließnaht 411 angeordnet sein. Mittels der Öffnung 413 kann das Säckchen 104 mit einer der beiden horizontalen Platten des erfindungsgemäßen Einsatzes verbunden werden. Weist das Trocknersäckchen 104 auch an der gegenüberliegenden Seite, neben der Schließnaht 412 eine entsprechende Öffnung auf, so kann das Säckchen 104 mit beiden horizontalen Platten des erfindungsgemäßen Einsatzes verbunden werden. Dadurch ist es möglich, eine noch größere Prozesssicherheit beim Einbau und auch Ausbau der Baugruppe Trocknersäckchen 104 und Einsatz zu erzielen.

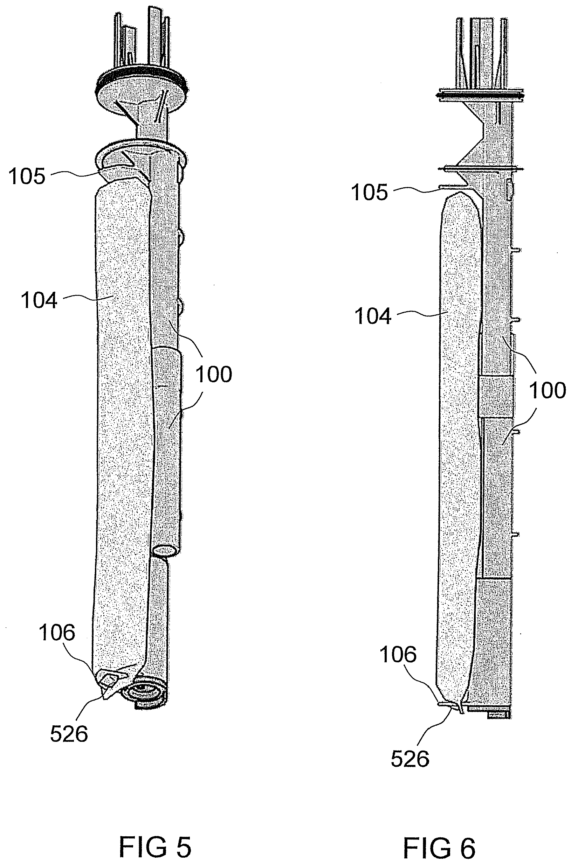

Fig. 5 zeigt einen Einsatz 100 mit dem in Fig. 4 gezeigten Trocknersäckchen 104 in isometrischer Ansicht. Das Trocknersäckchen 104 ist mit der Öffnung am unteren Anschlag 106 eingehakt und somit fest mit dem unteren Anschlag 106 verbunden. Der obere Anschlag 105 kann so ausgeführt sein, das das Trocknersäckchen 104 lediglich lose an dem oberen Anschlag 105 anliegt.

Um ein Abrutschen des an der unteren Platte 106 eingehängten Trocknersäckchens 104 von der unteren Platte 106 zu verhindern kann die untere Platte 104 mit einer entsprechenden Form bzw. mit einem Widerhaken 526 oder ähnlichem ausgestattet sein.

Fig. 6 zeigt in Seitenansicht das in Fig. 4 gezeigte Trocknersäckchen, das am Einsatz 100 eingehakt ist.

Gemäß den in den Figuren 5 und 6 gezeigten Ausführungsbeispielen ist der Einsatz 100 mit dem Säckchen 104 an der unteren Platte 106 verbunden.

Alternativ kann der Einsatz 100 in entsprechender Weise zusätzlich mit dem Säckchen 104 an der oberen Platte 105 verbunden sein.

Die beschriebenen Ausführungsbeispiele sind nur beispielhaft gewählt und können miteinander kombiniert werden. Alternativ ist es möglich, das Trocknersäckchen mit der Platte oder dem Einsatz zu verkleben, zu verschweißen oder auf eine andere Art zu befestigen.

## Patentansprüche

1. Einsatz (100) für einen Sammler (102) eines Kondensators, mit einem Trocknersäckchen, wobei der Einsatz ein erstes und ein zweites Ende aufweist und mit dem zweiten Ende voran in den Sammler eingeführt werden kann, mit folgenden Merkmalen:
einem Rohrsystem zum Leiten eines Kältemittels, wobei das Rohrsystem zwischen dem ersten und dem zweiten Ende des Einsatzes angeordnet ist und ein erstes vertikal angeordnetes Rohr aufweist, das ausgebildet ist, um das Kältemittel von dem Einlass (108) in den unteren Bereich des Sammlers (102) zu führen, wobei ein zweites vertikal angeordnetes Rohr angeordnet ist, das ausgebildet ist, um das Kältemittel aus dem unteren Bereich des Sammlers (102) abzusaugen und in den oberen Bereich des Sammlers (102) zu leiten, wobei das zweite Rohr neben dem ersten Rohr angeordnet ist;
einem Aufnahmeraum zum Aufnehmen des Trocknersäckchens (104), wobei der Aufnahmeraum, neben dem Rohrsystem, zwischen dem ersten und dem zweiten Ende des Einsatzes angeordnet ist; und
mindestens einem oberen Anschlag (105) und einem unteren Anschlag (106), um beim Einführen des Einsatzes in den Sammler einen Anschlag für das Trocknersäckchen zu bilden, wenn das Trocknersäckchen in dem Aufnahmeraum angeordnet ist, **dadurch gekennzeichnet, dass** die Anschläge (105, 106) als Platten ausgebildet sind und dass die obere Platte von dem ersten Rohr senkrecht oder annähernd senkrecht absteht und die untere Platte von dem zweiten Rohr senkrecht oder annähernd senkrecht absteht.

2. Einsatz gemäß Anspruch 1, bei der der mindestens eine Anschlag (105, 106) ausgebildet ist, um eine lose Verbindung zu dem Trocknersäckchen (104) bereitzustellen, wenn das Trocknersäckchen in dem Aufnahmeraum angeordnet ist.

3. Einsatz gemäß Anspruch 1, mit einem ersten Anschlag (105), der ausgebildet ist, um beim Einführen des Einsatzes (100) einen Anschlag für das Trocknersäckchen (104) in Richtung des ersten Endes zu bilden.

4. Einsatz gemäß einem der vorangegangenen Ansprüche, mit einem zweiten Anschlag (106), der ausgebildet ist, um beim Herausführen des Einsatzes (100) aus dem Sammler (102) einen Anschlag für das Trocknersäckchen (104) in Richtung des zweiten Endes zu bilden.

5. Einsatz gemäß Anspruch 4, bei dem ein Abstand zwischen dem ersten Anschlag (105) und dem zweiten Anschlag (106) größer als eine Länge des Trocknersäckchens (104) ist.

6. Einsatz gemäß einem der Ansprüche 4 oder 5, bei dem der zweite Anschlag (106) ausgebildet ist, um eine feste Verbindung zu dem Trocknersäckchen (104) bereitzustellen.

7. Einsatz gemäß Anspruch 6, bei dem der zweite Anschlag (106) einen Haken (526) zum Befestigen des Trocknersäckchens (104) aufweist.

8. Einsatz gemäß einem der vorangegangenen Ansprüche, bei dem der mindestens eine Anschlag (105, 106) als Platte ausgebildet ist, die quer zwischen dem ersten und dem zweiten Ende angeordnet ist.

9. Einsatz gemäß Anspruch 8, bei dem die Platte von dem Rohrsystem ausgehend in den Aufnahmeraum reicht.

## Claims

1. An insert (100) for a collector (102) of a capacitor, with a dryer bag, wherein the insert has a first and a second end and can be introduced into the collector with the second end first, having the following features:
a tube system for guiding a refrigerant, wherein the tube system is arranged between the first and the second end of the insert and has a first vertically arranged tube which is designed to guide the refrigerant from the inlet (108) to the lower region of the collector (102), wherein a second vertically arranged tube is arranged which is designed to draw the refrigerant out of the lower region of the collector (102) and guide it into the upper region of the collector (102), wherein the second tube is arranged next to the first tube;
a receiving space for receiving the dryer bag (104), wherein the receiving space, next to the tube system, is arranged between the first and the second end of the insert; and
at least one upper stop (105) and a lower stop (106) to form a stop for the dryer bag during the introduction of the insert into the collector when the dryer bag is arranged in the receiving space, **characterised in that** the stops (105, 106) are designed as plates and that the upper plate protrudes from the first tube in a perpendicular or approximately perpendicular manner and the lower plate protrudes from the second tube in a perpendicular or approximately perpendicular manner.

2. The insert according to claim 1, wherein the at least one stop (105, 106) is designed to provide a loose connection to the dryer bag (104) when the dryer bag is arranged in the receiving space.

3. The insert according to claim 1, with a first stop (105) which is designed to form a stop for the dryer bag (104) in the direction of the first end when the insert (100) is introduced.

4. The insert according to one of the preceding claims, with a second stop (106) which is designed to form a stop for the dryer bag (104) in the direction of the second end when the insert (100) is guided out of the collector (102) .

5. The insert according to claim 4, wherein a distance between the first stop (105) and the second stop (106) is greater than a length of the dryer bag (104) .

6. The insert according to one of claims 4 or 5, wherein the second stop (106) is designed to provide a fixed connection to the dryer bag (104).

7. The insert according to claim 6, wherein the second stop (106) has a hook (526) for fixing the dryer bag (104) .

8. The insert according to one of the preceding claims, wherein the at least one stop (105, 106) is designed as a plate which is arranged transversely between the first and the second end.

9. The insert according to claim 8, wherein the plate, starting from the tube system, reaches into the accepting space.

## Revendications

1. Cartouche (100) pour un collecteur (102) d'un condenseur, ladite cartouche comprenant un sachet déshydratant, où la cartouche présente une première et une seconde extrémité et peut être introduite dans le collecteur en insérant en premier la seconde extrémité, ladite cartouche ayant les caractéristiques suivantes et comprenant :
un système tubulaire servant à diriger un fluide frigorigène, où le système tubulaire est disposé entre la première et la seconde extrémité de la cartouche et présente un premier tube disposé verticalement, tube qui est configuré pour acheminer le fluide frigorigène provenant de l'entrée (108) et passant dans la zone inférieure du collecteur (102) où est disposé un deuxième tube disposé verticalement, tube qui est configuré pour aspirer le fluide frigorigène provenant de la zone inférieure du collecteur (102) et pour diriger ledit fluide frigorigène dans la zone supérieure du collecteur (102), où le deuxième tube est disposé à côté du premier tube ;
un espace de logement servant à recevoir le sachet déshydratant (104), où l'espace de logement, en plus du système tubulaire, est disposé entre la première et la seconde extrémité de la cartouche ; et
au moins une butée supérieure (105) et une butée inférieure (106) pour former, au cours de l'introduction de la cartouche dans le collecteur, une butée pour le sachet déshydratant quand le sachet déshydratant est disposé dans l'espace de logement, **caractérisé en ce que** les butées (105, 106) sont configurées comme des plaques, et **en ce que** la plaque supérieure dépasse verticalement ou presque verticalement du premier tube, et **en ce que** la plaque inférieure dépasse verticalement ou presque verticalement du deuxième tube.

2. Cartouche selon la revendication 1, dans laquelle la butée (105, 106) au moins au nombre de un est configurée pour fournir au sachet déshydratant (104) un assemblage qui soit détachable, quand le sachet déshydratant est disposé dans l'espace de logement.

3. Cartouche selon la revendication 1, ayant une première butée (105) qui est configurée pour former, au cours de l'introduction de la cartouche (100), une butée pour le sachet déshydratant (104) en direction de la première extrémité.

4. Cartouche selon l'une quelconque des revendications précédentes, ayant une seconde butée (106) qui est configurée pour former, au cours de l'extraction de la cartouche (100) sortie du collecteur (102), une butée pour le sachet déshydratant (104) en direction de la seconde extrémité.

5. Cartouche selon la revendication 4, dans laquelle une distance comprise entre la première butée (105) et la seconde butée (106) est supérieure à une longueur du sachet déshydratant (104).

6. Cartouche selon l'une des revendications 4 ou 5, dans laquelle la seconde butée (106) est configurée pour fournir au sachet déshydratant (104) un assemblage qui soit non détachable.

7. Cartouche selon la revendication 6, dans laquelle la seconde butée (106) présente un crochet (526) servant à la fixation du sachet déshydratant (104).

8. Cartouche selon l'une quelconque des revendications précédentes, dans laquelle la butée (105, 106) au moins au nombre de un est configurée comme une plaque qui est disposée de façon transversale entre la première et la seconde extrémité.

9. Cartouche selon la revendication 8, dans laquelle la plaque partant du système tubulaire s'étend dans l'espace de logement.
